Europäisches Patentamt

European Patent Office

Office européen des brevets

(19)

(11) Publication number: **0 251 669**
**A2**

(12) **EUROPEAN PATENT APPLICATION**

(21) Application number: 87305604.8

(22) Date of filing: 24.06.87

(51) Int. Cl.³: **B 60 T 8/42**

(30) Priority: 02.07.86 GB 8616095

(43) Date of publication of application:
07.01.88 Bulletin 88/1

(84) Designated Contracting States:
DE ES FR GB IT

(71) Applicant: AUTOMOTIVE PRODUCTS PUBLIC LIMITED COMPANY
Tachbrook Road
Leamington Spa Warwickshire CV31 3ER(GB)

(72) Inventor: Wimbush, Maurice John
19 Canon Young Road Whitnash
Leamington Spa Warwickshire CV31 2QU(GB)

(74) Representative: Watts, Peter Graham et al,
Anthony Cundy & Co. 384 Station Road Dorridge
Solihull West Midlands B93 8ES(GB)

(54) Fluid pressure actuators.

(57) A fluid pressure actuator has a piston (25) moveable axially within a casing (22), the piston (25) being sealed with respect of the casing (22) by means of a diaphragm (28), so as to divide the casing into two fluid tight chambers (32, 33). One chamber (32) is adapted to be connected to vacuum while the other chamber (33) is selectively connected to chamber (32) or to atmosphere via valve means (36). The connection between chambers (32 and 33) is provided via grooves (53) in the outer periphery (30) of diaphragm (28) and a cavity (52) defined between an end wall (24) of casing (22) and a retaining plate (31), said retaining plate (31) also serving to clamp the outer periphery (30) of the diaphragm (28) against the wall of the casing (22).

EP 0 251 669 A2

# FLUID PRESSURE ACTUATORS

This invention relates to fluid pressure actuators.

Servo actuators, for example of the type used in vehicle antilock braking systems as disclosed in British Patent Application Number 8609163, comprise a cylindrical casing having a piston therein which is movable axially of the casing. A flexible diaphragm is connected between the outer periphery of the piston and the casing to define two fluid tight chambers. Spring means is provided to urge the piston towards one end of the casing. The chamber on the side of the piston from which the spring means acts is connected to vacuum and the other chamber is selectively connected to vacuum or atmosphere, by a valve means mounted on the portion of the casing defining that chamber. The pressure differential across the piston may thus be controlled by the valve means, so as to control the actuator.

The valve means may be connected directly with the associated chamber by means of the hole passing through the portion of the casing to which it is attached. The valve means has inlets by means of which it may be connected to vacuum and to atmosphere. In the past the vacuum inlet to the valve means and the inlet to the other chamber have been interconnected by an external pipe, by means of which they are both connected to a source of vacuum.

The present invention provides an internal connection between an inlet of the valve means and the other chamber by means of which they may both be connected to a common pressure source.

According to one aspect of the present invention a fluid pressure actuator comprises; a cylindrical casing; a piston movable axially in said casing; a diaphragm connected between the piston and the casing to divide the casing into first and second fluid tight chambers; and valve means for selectively connecting the first chamber to a first or second fluid pressure source, said valve means being mounted on the end wall of the casing adjacent the first chamber and being connected thereto through a hole in the end wall, inlet means being provided by which the valve means may be connected to said first and second fluid pressure sources; characterised in that said diaphragm is clamped at its outer periphery between said end wall of the casing and a retaining plate, said retaining plate being secured to the end wall and defining a fluid tight cavity between the end wall and the retaining plate, a series of angularly spaced radially extending grooves are provided in the diaphragm on the side thereof adjacent the second chamber, to permit fluid connection between the second chamber and said cavity, and a hole is provided through the end wall between the cavity and one inlet of the valve means, so that the second chamber and the first chamber may be connected to a common pressure source via the valve means.

An embodiment of the invention is now described, by way of example only, with reference to the accompanying drawings, in which;

Figure 1 shows a sectional side elevation of a servo actuator in accordance with the present invention;

Figure 2 shows a partial enlargement of the servo actuator shown in Figure 1;

Figure 3 shows an enlarged section of the diaphragm taken along the line III-III in Figure 2;  and

Figure 4 shows a portion of the valve block of the actuator shown in Figure 1, illustrating a modification thereto.

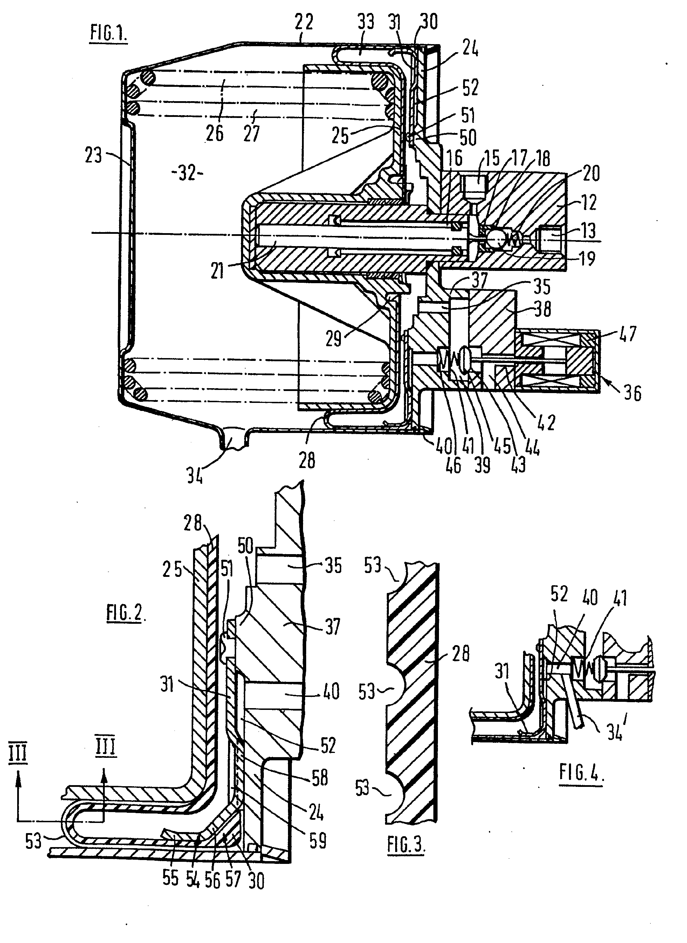

Referring to Figure 1, the servo actuator comprises a cylinder body 12 having an inlet port 13 and an outlet port 15 opening into a bore 16. A valve seat member 17 is secured in the bore 16 and has a control port 18 which can be closed by ball 19. A control plunger 21 is slidable in the bore 16 and in the position shown in Figure 1 is operative to unseat the ball 19 against a light compression spring 20 and open communication between inlet port 13 and outlet port 15.

A cylindrical casing 22 is closed at one end by end wall 23 and at the other end by closure member 24 which is secured and sealed to the cylindrical wall portion of the casing 22. The cylinder body 12 is mounted through the closure member 24 so that it projects coaxially into the casing 22. A piston 25 is slidingly sealed on the cylinder body 12 within the casing 22 and abuts the plunger 21. A pair of helical compression springs 26 and 27 act between the end wall 23 of casing 22 and the piston 25 to force the plunger 21 into the position illustrated in Figure 1.

An annular flexible diaphragm 28 is connected at its inner periphery 29 to the piston 25 and its outer periphery 30 is trapped against the junction of the casing 22 and closure member 24 by an annular retaining plate 31. The diaphragm 28 and piston 25 thereby separate the casing 22 into two fluid tight chambers 32 and 33. Chamber 32 is connected to a source of vacuum through a port 34 while chamber 33 is selectively connected to a source of vacuum or to atmosphere through a port 35 and valve means 36.

The valve means 36 has a valve block 37 which is formed integrally of the closure member 24. A valve housing 38 is bolted to the valve block 37 to define a chamber 39. The port 35 extends through the valve block 37 into the chamber 39. A second port 40 extends through the valve block 37 into chamber 39 to define a valve seat 41. A bore 42 coaxial with port 40 is formed in the valve housing 38 and opens into chamber 39 to define a further valve seat 43. A further port 44 opens into the bore 42. A valve member 45 is positioned between the seats 41 and 43. A spring 46 urges the valve member 45 into engagement with seat 43 to close port 44. A solenoid 47 is arranged to move the valve member 45 against a spring 46 away from seat formation 43 and into engagement with seat formation 41 thereby closing port 40.

As illustrated in greater detail in Figures 2 and 3, the retaining plate 31 is secured to an annular projection 50 on the inner surface of closure member 24, by means of rivets 51, a seal being provided therebetween by means of a gasket or O-ring (not shown). The retaining plate 31 is formed from pressed steel and has at its outer periphery a cylindrical flange formation 54. The outer portion 55 of the flange formation 54 extends substantially axially and traps the diaphragm 28 against the cylindrical wall of the casing 22. The inner portion 56 of the flange formation 54 is inclined inwardly from portion 55 and provides a wedge shaped cavity 57 with the junction of the cylindrical wall of casing 22 and closure member 24. The outer periphery 30 of diaphragm 28 is shaped to correspond generally to the cavity 57, so that it will be clamped against the junction of the cylindrical wall of casing 22 and closure member 24.

An annular abutment 58 is provided between the portion of retaining plate 31 secured to the annular projection 50 and the flange formation 54 and this engages the closure member 24 to define a fluid tight annular cavity 52 between the retaining plate 31 and closure member 24.

A series of angularly spaced radial grooves 53 are provided in the outer peripheral portion of diaphragm 28 and these grooves are connected to the cavity 52 via a series of angularly spaced radial ribs 59 formed across the abutment 58, so that they provide connection between the chamber 32 and cavity 52. Port 40 opens into the cavity 52, so that when the valve member 45 opens seat 41 and closes seat 43, chamber 33 will be connected via port 35, chamber 39, port 40, cavity 52 and the grooves 53, with chamber 32 and, via port 34, to vacuum. Port 44 will be open to atmosphere, so that when seat 43 is opened and seat 41 closed, chamber 33 will be connected to atmosphere and chamber 32 remains connected to vacuum.

As illustrated in Figure 4, port 34 by which chamber 32 is connected to a source of vacuum may be replaced by a port 34' which is provided in the valve block 37, opening into bore 40 intermediate of the seat 41 and annular cavity 52. Chamber 32 will then be permanently connected to port 34' and vacuum via grooves 53, cavity 52 and bore 40 while chamber 33 may be selectively connected to port 34' and vacuum by means of valve member 45. Removal of port 34 from the casing 22 very much simplifies production of this component.

The above described solenoid actuator is suitable for use in vehicle antilock braking systems. The inlet port 13 is connected to a brake hydraulic master cylinder and the outlet port 15 is connected to one or more wheel cylinders which act to apply a brake to one or more wheels of the vehicle. With solenoid 47 de-energised (as illustrated in Figure 1) chambers 32 and 33 are subjected to vacuum so that springs 26 and 27 act on the piston 25 to force plunger 21 towards the ball 19 and keep inlet port and outlet port 15 in communication. If solenoid 47 is energised, air enters chamber 33 and the force created by the air acting on diaphragm 28 and piston 25 adds to the force applied to the plunger 21 by brake pressure at the outlet port 15, and the piston 25 is thus moved against the force of springs 26 and 27. Plunger 21 moves with piston

- 8 -

allowing the ball 19 to engage seat 17 thereby interrupting communication between the inlet port 13 and outlet port 15. Also, as the plunger 21 moves away from the ball 19, brake fluid will flow back into the bore 16 and pressure at outlet 15 will be reduced.

The solenoid 47 is controlled by control means (not shown) comprising wheel speed monitoring and logic circuits which produce outputs indicative of the wheel deceleration. Thus when wheel deceleration increases above a certain predetermined value, the solenoid 47 may be actuated to reduce the braking effort.

Various modifications may be made without departing from the invention, for example instead of using a pressed steel retaining plate 31, a moulded plastic or a diecast metal plate may be used. Although this invention has been specifically described with reference to a servo actuator, it is equally applicable to other forms of fluid pressure actuators in which a flexible diaphragm separates two fluid tight chambers and valve means controlling the pressure of fluid in one chamber is connected directly with that chamber. The form of the valve means may also be varied without departing from the invention.

CLAIMS

1.      A fluid pressure actuator comprising a cylindrical casing (22); a piston (25) movable axially in said casing (22); a diaphragm (28) connected between the piston (25) and the casing (22) to divide the casing (22) into first and second fluid tight chambers (33, 32); and valve means (36) for selectively connecting the first chamber (33) to a first or second fluid pressure source, said valve means (36) being mounted on the end wall (24) of the casing (22) adjacent the first chamber (33) and being connected thereto through a hole (35) in the end wall (24), inlet means (41, 43) being provided by which the valve means (36) may be connected to said first and second fluid pressure sources; characterised in that said diaphragm (28) is clamped at its outer periphery (30) between said end wall (24) of the casing (22) and a retaining plate (31), said retaining plate (31) being secured to the end wall (24) and defining a fluid tight cavity (52) between the end wall (24) and the retaining plate (31), a series of angularly spaced radially extending grooves (53) are provided in the diaphragm (28) on the side thereof adjacent the second chamber (32), to permit fluid connection between the second chamber (32) and said cavity (52), and a hole (40) is provided through the end wall (24) between the cavity (52) and one inlet (41) of the valve means (36), so that the second chamber (32) and the first chamber (33) may be connected to a common pressure source via the valve means (36).

2. A fluid pressure actuator according to Claim 1 characterised in that the retaining plate (31) is attached to an annular projection (50) on said end wall (24), internally of the casing (22).

3. A fluid pressure actuator according to claim 1 or 2 characterised in that the retaining plate (31) has a cylindrical flange formation (54) at its outer periphery which defines a wedge shaped annular cavity (57) with the junction of the cylindrical wall of the casing (22) and the end wall (24), the outer periphery (30) of the diaphragm (28) being generally of the same shape as the wedge shaped cavity (57) and being clamped by the flange formation (54) against the junction of the cylindrical wall of the casing (22) and the end wall (24)

4. A fluid pressure actuator according to any one of claims 1 to 3 characterised in that said end wall (24) of the casing (22) is formed by a closure member which is secured and sealed in an open end of the cylindrical wall portion of the casing (22).

5.      A fluid pressure actuator according to Claim 4 characterised in that the closure member (24) defines a valve block (37) through which holes (35 and 40) are provided from said first chamber (33) and from said cavity (52).

6.      A fluid pressure actuator according to any one of the preceding characterised in that the valve means (36) includes a valve member (45) which may selectively; open communication between the hole (40) from said cavity (52) and the hole (35) from said first chamber (33) and close the other inlet (43); or open communication between said other inlet (43) and the hole (35) from said first chamber (33) while closing the hole (40) from said cavity (52).

7.      A fluid pressure actuator according to any one of preceding claims characterised in that the retaining plate (31) is formed as a metal pressing, a plastic moulding or a diecast metal moulding.

FIG.1.

FIG.2.

FIG.3.

FIG.4.